# DEMANDE DE BREVET EUROPEEN

(11) **EP 2 949 203 A1**
(43) Date de publication de la demande: **02.12.2015**
(21) Numéro de dépôt: 15169464.3
(22) Date de dépôt: 27.05.2015
(51) Int. Cl.: A01G 23/091

(54) **OUTIL D'ABATTAGE D'ARBRES MUNI D'UN DISQUE DE COUPE**

(30) Priorité: 27.05.2014 FR 1454803
(71) Demandeur: Jacquier, Emile, 51300 Frignicourt (FR)
(72) Inventeur: Jacquier, Emile, 51300 Frignicourt (FR); Rat, Jérôme, 51300 Frignicourt (FR)
(74) Mandataire: Rhein, Alain

(57) **Abrégé**

L'invention concerne un outil d'abattage d'arbres comportant un châssis (2), des moyens de maintien adaptés à maintenir un arbre solidaire au châssis (2), et des moyens de coupe (5) adaptés à couper l'arbre, les moyens de coupe (5) étant formés par un disque de coupe (5) denté monté rotatif par rapport au châssis (2).

Selon l'invention, le disque de coupe (5) est disposé entre au moins un patin inférieur (14) et un patin supérieur (15) qui maintiennent entre eux le disque de coupe (5) et évitent qu'il ne se déforme.

## Description

L'invention concerne un outil d'abattage d'arbres muni d'un disque de coupe.

On connait un outil d'abattage d'arbres du type qui comporte un châssis, des moyens de maintien adaptés à maintenir l'arbre solidaire au châssis, des moyens de coupe adaptés à couper l'arbre, les moyens de coupe étant formés par un disque de coupe denté monté rotatif par rapport au châssis.

Classiquement, aux Etats-Unis d'Amérique et au Canada, les outils de coupe du type précité comprennent des disques de coupe dont l'épaisseur est d'environ 50 mm, ce qui entraîne à la fois une forte résistance mécanique à la déformation des disques et la présence de moteurs à puissance élevée.

Un inconvénient d'un tel outil d'abattage est que, notamment quand l'épaisseur du disque de coupe est faible (typiquement moins de 20 mm), le disque peut subir des déformations mécaniques dans le temps.

La présente invention vise à pallier l'inconvénient précité, notamment dans le cas de disque de coupe d'épaisseur inférieur à 20 mm.

Ainsi, selon l'invention, le disque de coupe est disposé entre au moins un patin inférieur et un patin supérieur qui se font face, c'est-à-dire qui sont en vis à vis, en particulier sur le bord périphérique du disque de coupe. Ainsi, lesdits patins inferieur et extérieur maintiennent mécaniquement entre eux le disque de coupe et évitent qu'il ne se déforme.

En réglant les écarts entre le disque de coupe et les patins inférieur et supérieur, il est possible de limiter, voire d'empêcher, une quelconque déformation mécanique du disque de coupe, même lorsque son épaisseur est faible (par exemple 16 mm), et donc d'utiliser des moteurs nécessitant une puissance moindre.

D'autres particularités et avantages de la présente invention apparaîtront dans la description d'un mode de réalisation donné à titre d'exemple non limitatif et illustré dans les dessins mis en annexe dans lesquels :
- la figure 1 est une vue en perspective d'un outil d'abattage conforme à la présente invention ; et
- la figure 2 est une vue en coupe de l'outil d'abattage de la figure 1, la coupe étant réalisée le long de l'axe de rotation du disque de coupe ;
- la figure 3 est une vue du dessus d'un bras articulé 41 de l'outil d'abattage de la figure 1.

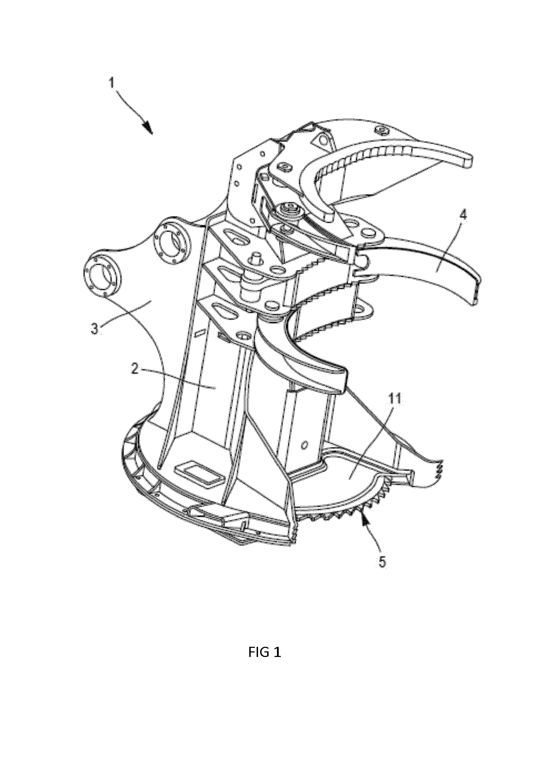

Comme illustré à la figure 1, un outil d'abattage 1 conforme à la présente invention est destiné à être porté par une extrémité d'un bras de travail d'un engin de manutention.

L'outil d'abattage 1 comporte un châssis 2 qui forme le corps principal de l'outil d'abattage 1 et qui porte des moyens de liaison 3 avec le bras de travail, des moyens de maintien 4 de l'arbre, et des moyens de coupe 5 de l'arbre.

En l'occurrence, les moyens de liaison 3 sont formés par deux plaques parallèles qui s'étendent en direction opposée des moyens de maintien 4 et des moyens de coupe 5.

Les moyens de maintien 4 sont adaptés à maintenir solidaire du châssis 2 l'arbre à couper, puis l'arbre coupé. Dans le présent mode de réalisation, les moyens de maintien 4 sont formés par au moins une paire de bras articulés 41 entre une position déployée qui permet la circulation de l'arbre et une position resserrée qui permet son immobilisation.

Selon un mode de réalisation particulier, les moyens de maintien 4 sont de longueur réglable. En d'autres termes, les bras articulés 41 sont de longueur adaptable exactement à la taille et au type d'arbre à couper. En effet, suivant le travail de coupe à effectuer, il est avantageux de pouvoir avoir des bras articulés 41 plus ou moins grands, c'est-à-dire de pouvoir ajuster la portée et l'ouverture des moyens de maintien 4.

Plus particulièrement, afin de régler la portée des moyens de maintien 4 en fonction de la taille des arbres à couper, chaque bras articulé 41 se présente en deux parties 42a, 42b coulissantes l'une dans l'autre. La première partie 42a du bras articulé 41 est fixe et est reliée au châssis 2, tandis que la deuxième partie 42b est amovible. La partie 42b va coulisser dans la partie 42a de manière à pouvoir adapter la longueur d'un bras articulé 41 en fonction de l'arbre à couper.

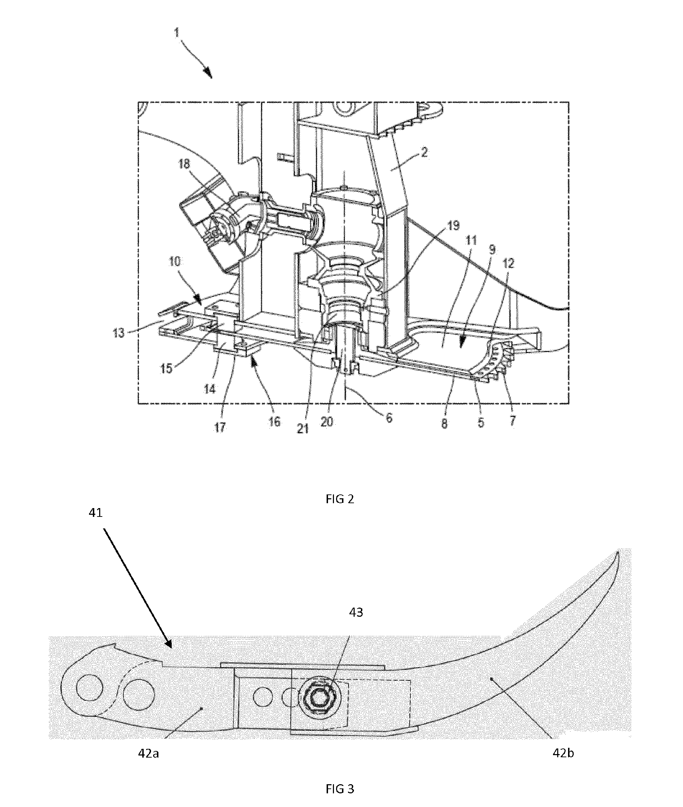

Une fois la longueur ajustée, la partie 42b peut être immobilisée par rapport à la partie 42a. L'immobilisation peut, notamment, être obtenue par une goupille déplaçable manuellement selon un axe de verrouillage 43 traversant les deux parties 42a,42b tel qu'illustré sur la figure 3.

Avantageusement, la goupille est déplaçable selon trois positions permettant l'écartement et le coulissement d'une partie par rapport à l'autre d'environ 20 cm.

Ainsi selon ce mode de réalisation particulier, la portée des moyens de maintien 4, c'est-à-dire la longueur des bras articulés 41 est modulable.

Avantageusement, les bras articulés 41 longs sont utilisés, par exemple, pour ramener les petits bois vers le système de coupe, et les bras articulés 41 courts, pour les coupes de taillis, de cépées ou pour une coupe de bois en pied franc.

Les moyens de coupe 5 sont adaptés à couper l'arbre. Ils sont formés par un disque de coupe 5 denté monté rotatif par rapport au châssis 2 selon un axe de rotation 6.

Avantageusement, l'axe de rotation 6 du disque de coupe 5 est central.

De préférence, le disque de coupe 5 présente une épaisseur d'au plus 20 mm (par exemple, dans le présent mode de réalisation, l'épaisseur est de 16 mm). Dans le présent exemple, les dents 7 du disque de coupe 5 sont formés par des segments coupants solidarisés à un disque nu 8. Les dents 7 pourraient être formées par une chaîne à tronçonner solidarisée à un disque nu 8.

Comme illustré aux figures 1 et 2, les moyens de maintien 4 en position déployée définissent, d'une part, un secteur angulaire de coupe 9 centré sur l'axe de rotation 6 du disque de coupe 5, et, d'autre part, un secteur angulaire d'évacuation 10 complémentaire du secteur angulaire de coupe 9.

Dans le présent mode de réalisation, les dents 7 du disque de coupe 5 ne sont accessibles depuis l'extérieur uniquement dans le secteur angulaire de coupe 9. Dans le présent mode de réalisation, le secteur angulaire de coupe 9 s'étend sur 90° environ, et le secteur angulaire d'évacuation 10 s'étend sur 270° environ.

Comme illustré aux figures, la partie de la face supérieure du disque nu 8 se trouvant dans le secteur angulaire de coupe 9 est protégée par une tôle de protection 11 du châssis 2. Cette tôle de protection 11 s'étend radialement jusqu'à la base des dents 7, est disposée de façon affleurant au disque nu 8 et présente un biseau 12 à son extrémité radiale. De cette façon, la tôle de protection 11 reçoit la partie coupée de l'arbre au fur et à mesure de sa coupe, puis l'intégralité de l'arbre coupé. La présence de la tôle de protection 11 permet à l'outil d'abattage 1 de supporter les arbres coupés sans déformer le disque de coupe 5 malgré sa faible épaisseur (l'épaisseur des disques de coupe utilisés dans les pays d'Amérique du nord est typiquement de l'ordre de 50 mm).

Le châssis 2 est par ailleurs équipé, sur le secteur angulaire d'évacuation 10, de fentes d'évacuation 13 permettant l'évacuation de copeaux.

L'évacuation des copeaux dans une direction spécifique est nécessaire pour faciliter l'usage de l'outil d'abatage 1 par l'utilisateur.

Comme illustré à la figure 2, les fentes d'évacuation 13 sont orientées vers le sol afin d'éviter que des projections ne blessent un opérateur. Enfin, il serait possible, en cas de nécessité, de fermer ponctuellement une ou plusieurs de ces fentes d'évacuation 13, notamment par l'utilisation de tôle de fermeture et de vis de fixation.

Dans le but de limiter, voire d'éviter, toute déformation mécanique du disque de coupe 5 malgré sa faible épaisseur, ce dernier est disposé entre au moins une paire de patins (de préférence, au moins deux paires de patins). Chaque paire de patin comprend un patin inférieur 14 et un patin supérieur 15. Lesdits patins 14 et 15 se font face, c'est-à-dire qu'ils sont en vis à vis, en particulier sur le bord périphérique du disque de coupe 5. Ainsi, lesdits patins inferieur 14 et extérieur 15 maintiennent entre eux le disque de coupe 5 (plus précisément, le disque nu 8) et évitent qu'il ne se déforme.

Par ailleurs, le châssis 2 comprend au moins une entretoise 16 qui maintient le disque de coupe 5 au-dessus de la surface du sol. De préférence, cette entretoise 16 est formée par le patin inférieur 14 et la tôle 17 auquel le patin inférieur 14 est fixé. De cette façon, d'une part, la coupe des arbres n'est pas effectuée au ras du sol ce qui facilite la repousse des souches, et, d'autre part, les dents 7 du disque de coupe 5 sont suffisamment hautes pour éviter de frapper des pierres. Ici, la distance séparant le sol du disque de coupe 5 est d'environ 10 cm.

Enfin, le châssis 2 comporte un moteur 18 (alimenté par l'engin de manutention), un réducteur 19, un arbre de liaison 20 fixé au disque de coupe 5 et relié au réducteur 19, et un roulement 21 positionné entre le réducteur 19 et le disque de coupe 5 (plus précisément, l'arbre de liaison 20). De préférence, le roulement 21 est un roulement épais qui permet d'absorber les efforts subis par le disque de coupe 5 et de soulager ainsi le réducteur 19.

Selon l'invention, le mouvement des différents éléments de l'outil d'abattage 1 est réalisé par l'intermédiaire d'un système à entrainement hydraulique fonctionnant à l'aide dudit moteur 18.

Plus particulièrement, ledit système hydraulique permet, d'une part le mouvement d'ouverture et de fermeture des moyens de maintien 4, et d'autre part le mouvement de rotation du disque de coupe 5.

En d'autres termes, ces deux types de mouvement dépendent de l'alimentation en liquide hydraulique et du fonctionnement dudit système hydraulique.

De manière spécifique, l'ouverture des moyens de maintien 4 est dépendante d'une commande d'ouverture, tandis que la fermeture est respectivement dépendante d'une commande de fermeture.

Il a été constaté avec les systèmes de l'état de l'art qu'un risque de déformation mécanique supplémentaire existe si l'ouverture et la fermeture des moyens de maintien 4 n'est pas simultané à la rotation du disque de coupe 5.

En d'autres termes, l'activation ou de désactivation de la commande d'ouverture ou de fermeture des moyens de maintien peut générer un temps de latence où les moyens de maintien 4 ne sont pas aptes à retenir ou relâcher complètement les arbres à couper alors que le disque de coupe 5 est toujours en rotation.

En effet, si l'enserrement, par les moyens 4, de l'arbre à couper et la découpe par le disque 5 ne sont pas effectués simultanément, l'arbre coupé n'est pas maintenu, il peut par exemple tomber sur le disque de coupe 5 et le déformer mécaniquement.

Afin d'éviter ce phénomène de déformation du disque de coupe 5 résultant d'une fermeture et/ou d'une ouverture ralentie des moyens de maintien 4, l'outil d'abattage 1 peut comprendre un ensemble d'accumulation et de pilotage du liquide hydraulique lors des mouvements des moyens de maintien 4.

En effet, le mouvement des moyens de maintien 4 dépend du débit de liquide hydraulique fournit, or ce débit peut parfois être insuffisant.

Pour remédier au débit insuffisant, ledit ensemble d'accumulation et de pilotage du liquide hydraulique de l'outil d'abattage 1 est relié à une bonbonne sous pression.

Cette bonbonne sous pression se décharge à l'instant où l'opérateur relâche la commande d'ouverture des moyens de maintien 4. Le déchargement de la bobonne va alimenter en liquide hydraulique instantanément les moyens de maintien 4 qui vont débuter leur fermeture.

En d'autres termes, la présence de la bonbonne sous pression a pour avantage de permettre la fermeture des moyens de maintien 4 avant même que l'opérateur n'ait actionné la commande de fermeture des moyens de maintien 4.

Ainsi selon ce mode de réalisation spécifique, la présence dudit ensemble d'accumulation et de pilotage reliée à la bonbonne de pression permet aux moyens de maintien 4, plus spécifiquement aux bras articulés 41, de s'ouvrir et de se fermer rapidement et simultanément à la découpe par le disque de coupe 5.

Selon un autre mode de réalisation particulier, l'outil d'abattage 1 comprend en sortie du moteur 18 un embrayage à dépassement.

Dans certains cas, selon les mouvements de l'utilisateur, le liquide hydraulique, actionnant l'outil d'abattage 1, alimentera plutôt les bras articulés 41 que le système de rotation du disque de coupe 5

Ce phénomène a pour désavantage de fortement freiner voir de stopper la rotation du disque de coupe 5.

Or un ralentissement du disque de coupe 5 a également pour conséquence d'altérer mécaniquement le disque de coupe 5 et de renforcer sa détérioration.

Pour pallier cet inconvénient, l'utilisation, en sortie de moteur 18, d'un embrayage à dépassement va permettre de libérer le disque de coupe 5 de l'entrainement dès lors que l'alimentation en liquide hydraulique aura tendance à freiner sa rotation.

Selon ce mode de réalisation, si la vitesse de rotation du disque de coupe 5 est inférieure à celle de son moteur 18 et si le liquide hydraulique n'arrive plus sur le disque 5, le moteur 18 va automatiquement embrayer l'embrayage à dépassement.

A contrario, si le liquide hydraulique recommence à entrainer la rotation du disque de coupe 5, l'embrayage va retrouver une position débrayée automatiquement, et le liquide hydraulique va reprendre son rôle d'entrainement en rotation du disque de coupe 5.

La présente invention présente donc l'avantage d'éviter tous les phénomènes susceptibles de déformer le disque de coupe.

## Revendications

1. Outil d'abattage (1) d'arbres comportant :
- un châssis (2) ;
- des moyens de maintien (4) adaptés à maintenir un arbre solidaire au châssis (2) ; lesdits moyens de maintien (4) définissent un secteur angulaire d'évacuation (10) complémentaire à un secteur angulaire de coupe (9);
- et des moyens de coupe (5) adaptés à couper l'arbre, lesdits moyens de coupe (5) étant formés par un disque de coupe (5) denté monté rotatif par rapport au châssis (2) ;
- ledit disque de coupe (5) est disposé entre au moins un patin inférieur (14) et un patin supérieur (15) qui maintiennent entre eux le disque de coupe (5) et évitent qu'il ne se déforme ;
**caractérisé en ce que** :
le châssis (2) est équipé, sur la partie du pourtour du disque (5) se trouvant dans le secteur angulaire d'évacuation (10), de fentes d'évacuation (13).

2. Outil d'abattage (1) selon la revendication 1, **caractérisé en ce que** le châssis (2) comprend au moins une entretoise (16) qui maintient le disque de coupe (5) à environ 10 cm au-dessus de la surface du sol.

3. Outil d'abattage (1) selon l'une des revendications 1 et 2, **caractérisé en ce que** le disque de coupe (5) a une épaisseur d'au plus 20 mm.

4. Outil d'abattage (1) selon l'une des revendications 1 à 3, **caractérisé en ce que** la partie de la face supérieure du disque de coupe (5) se trouvant sur un secteur angulaire de coupe (9) défini par les moyens de maintien (4) est protégée par une tôle de protection (11) qui est adaptée à recevoir l'arbre coupé.

5. Outil d'abattage (1) selon la revendication 1, **caractérisé en ce que** les fentes d'évacuation (13) sont orientées vers le sol.

6. Outil d'abattage (1) selon la revendication 1, **caractérisé en ce qu'**au moins une fente d'évacuation (13) peut être fermée.

7. Outil d'abattage (1) selon l'une des revendications 1 à 6, **caractérisé en ce que** le châssis (2) comporte un réducteur (19) et un roulement (21) positionné entre le réducteur (19) et le disque de coupe (5) de façon à absorber les efforts subis par ce dernier et à soulager le réducteur (19).

8. Outil d'abattage (1) selon l'une des revendications 1 à 7, **caractérisé en ce que** les dents (7) du disque de coupe (5) sont formées par des segments coupants.

9. Outil d'abattage (1) selon l'une des revendications 1 à 8, **caractérisé en ce que** les dents (7) du disque de coupe (5) sont formées par une chaîne à tronçonner.
